# EUROPEAN PATENT APPLICATION

(11) **EP 4 589 509 A1**
(43) Date of publication of application: **23.07.2025**
(21) Application number: 24186978.3
(22) Date of filing: 07.07.2024
(51) Int. Cl.: G06Q 10/087, G06Q 30/0601

(54) **A METHOD OF CREATING A PRODUCTION ORDER**

(30) Priority: 22.01.2024 US 202463623380 P
(71) Applicant: AutoStore Technology AS, 5578 Nedre Vats (NO)
(72) Inventor: Latsch, Steven, 5578 Nedre Vats (NO)
(74) Representative: Kilburn & Strode LLP

(57) **Abstract**

The disclosure relates to a method of creating a production order in an automated storage and retrieval system, the production order comprising a preselected set of order components, the method comprising receiving an order component preselection, retrieving the components at the automated storage and retrieval system, collecting the set of components as a production order kit and storing the production order kit at the automated storage and retrieval system.

## Description

### TECHNICAL FIELD

The disclosure relates to a method of creating a production order, a computer readable medium and an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some instances, the automated storage and retrieval system stores grocery related goods for delivery to end users based on user orders. In some instances, users are able to select a recipe such that all of the ingredients are included in the delivery along with the other selected items.

However, current approaches face inventory management, production efficiency and wastage issues in estimating sales causing them to limit their recipe selection for efficiency.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows steps involved in a method of creating a production order in an automated storage and retrieval; and
Fig. 6 shows subsequent meal kit retrieval steps according to an embodiment.

### DETAILED DESCRIPTION

In overview, the disclosure relates to a method of creating a production order in an automated storage and retrieval system. The production order comprises a preselected set of order components which are retrieved from the storage system and collected as a production order kit. The production order kit is then stored at the automated storage and retrieval system for subsequent retrieval. In embodiments, for example, the production order kit is a meal kit and the order components comprise meal recipe components. The automated storage and retrieval system may be a remote or warehousing system or can be point of sale such as a grocery store, for example a remote fulfilment center. By permitting user pre-selection, efficiency can be improved and inventorying requirements can be diminished. For example, where the method is performed at a grocery store, it is not necessary, for example, to estimate meal kit sales which could otherwise cause the store to limit their recipe selection for efficiency and absorb costs associated with unsold meal kits, hence eliminating waste and allowing storing of kits safely for later pick up or delivery.

### Automated storage and retrieval system overview

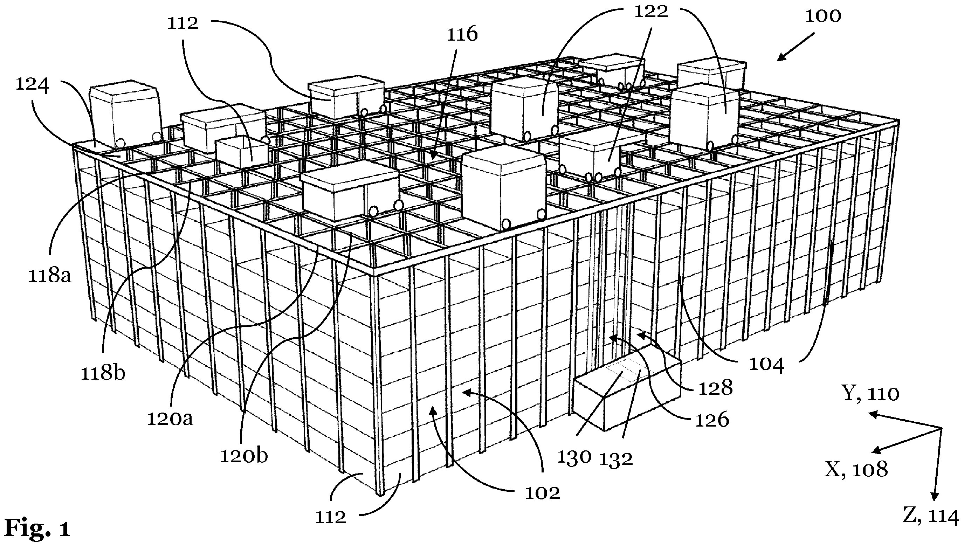

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

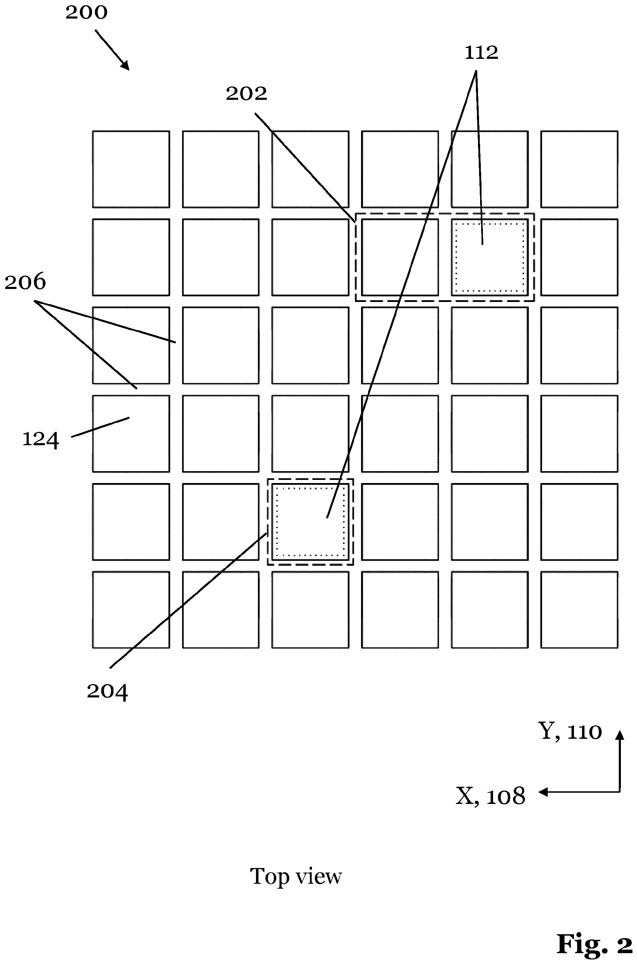

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

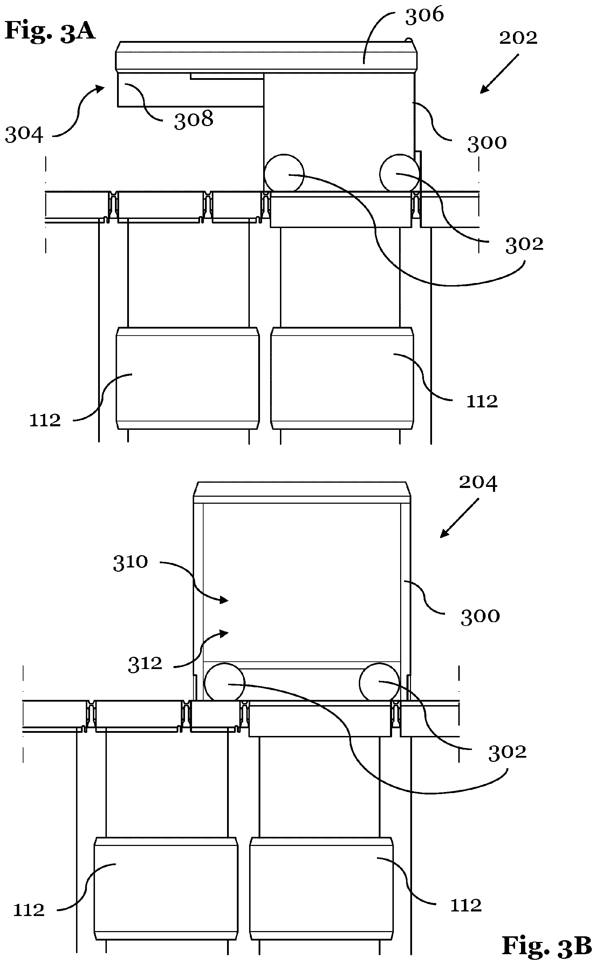

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

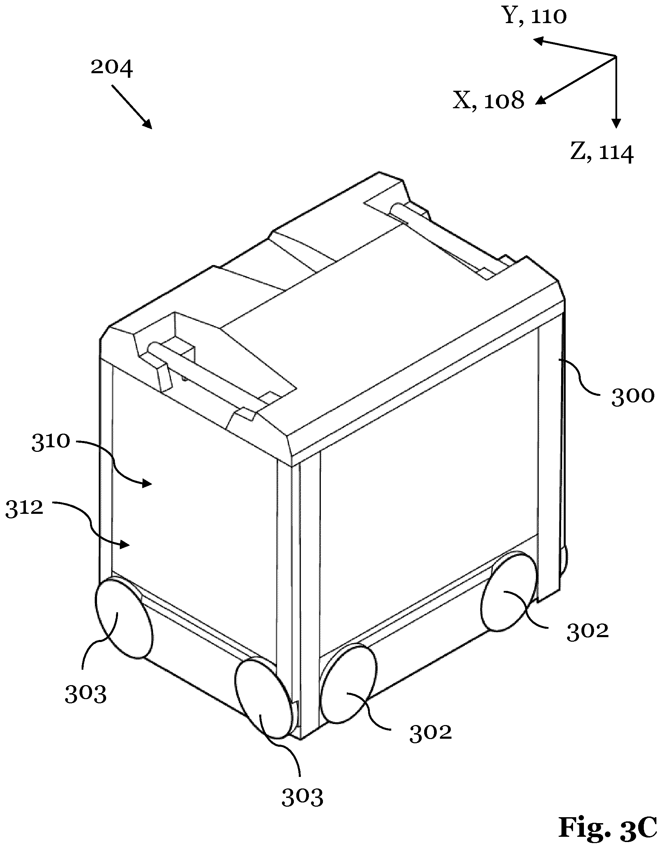

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

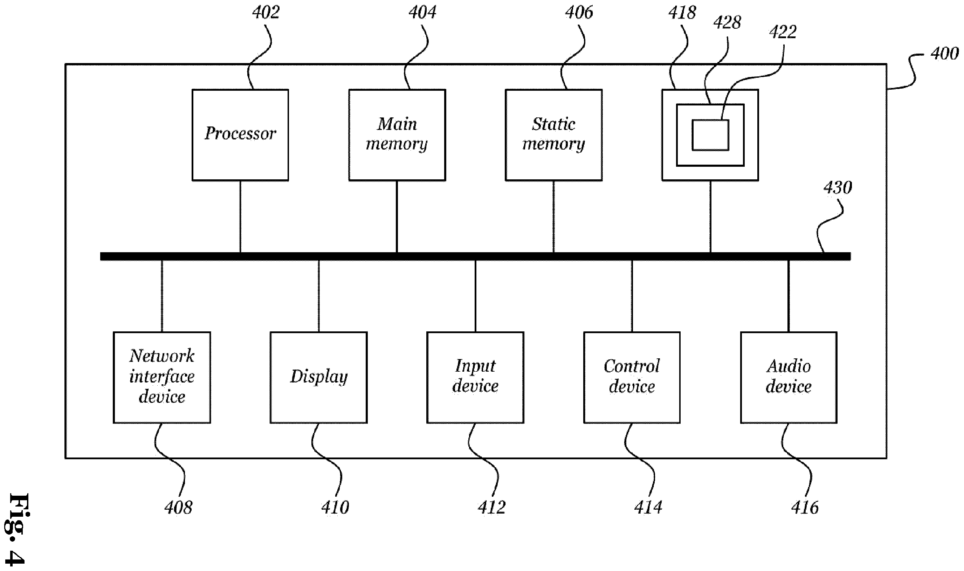

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### A method of creating a production order

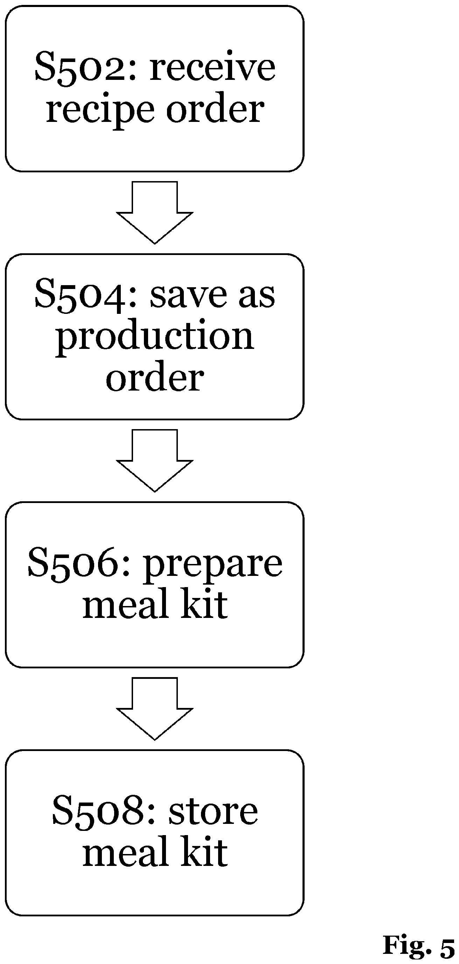

A method according to a preferred approach is shown in Fig. 5. At step 502 the system receives a production order for example browsing a preselected set of order components such as a recipe and saves the production order at step 504. This can be achieved by any appropriate form of software allowing consumers to search for production order types such as recipes and add the respective components or ingredients to their shopping carts.

By saving the customer recipes as a production order this permits preparation of the production order kit such as a meal kit at step 506 such that the ingredients are prepared and packaged by the system for pick up or delivery at a later date.

It will be noted that steps 502-506 can be performed as a batch creation step in which a plurality of production orders are created at the same time either for a common set of components or ingredients, or for different sets of components or ingredients. It will further be appreciated that the order component preselection can be presented to the user via human readable computer interface and further in which existing user preferences can be applied in order to present appropriate component preselection options.

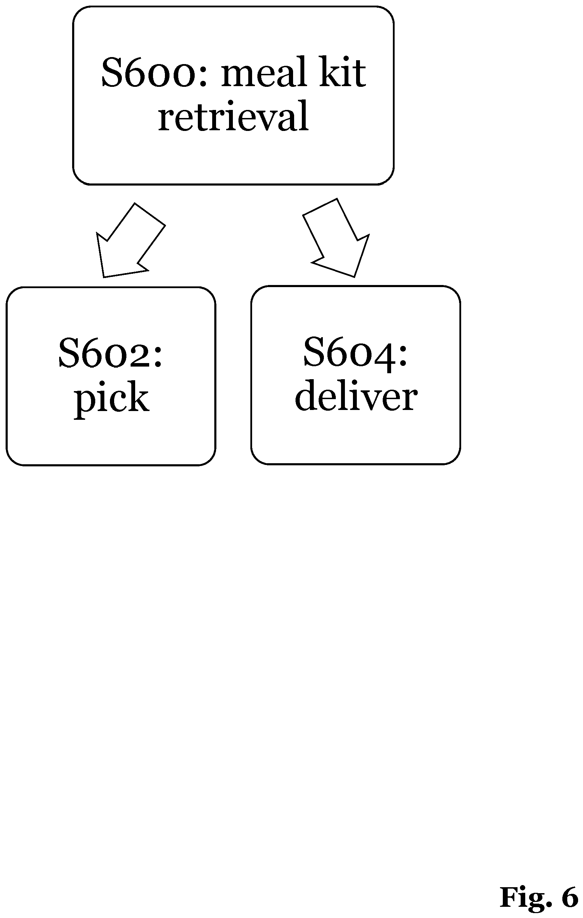

At step 508, the production order kit is stored at the automated storage and retrieval system for subsequent picking or delivery as discussed in more detail with reference to Fig. 6.

The production order kit preparation step can be carried out in any appropriate manner, for example, by presenting appropriate components to an operator at a port 130, 132, or by an automated picking process performed by robots. Yet further, where a batch of orders is received, a picking list of ingredients and quantities required to make all the kits for a given day can be produced, reducing ingredient waste and improving productivity. Storage of the kits can be in a refrigerated grid for storage as appropriate and the pre-ordered kits can be combined with a broader order, for example, a customer's regular grocery order as appropriate.

### Kit retrieval

As discussed above, the automated storage and retrieval system 600 can be a remote fulfilment center or an in-store system. For example, in one meal kit retrieval step 602, the in-store system includes appropriate pick-up ports in a pick-up column 126, 128 where the prepared kit is delivered directly to the user. Hence the customer can retrieve their meal kit ordered directly from the grid. Alternatively, the order could be retrieved from the grid by store employees for in-store pick up or delivery.

Alternatively, referring to step 604, the kit can be prepared at a remote fulfilment centre for delivery in which case the ingredients can be stored in an appropriate facility once curated in the manner discussed above for addition to a customer order, or sent in a dedicated fashion based on the order pre-selection.

It will be seen that multiple benefits are achieved according to the claimed approach. Grocery stores are able to offer a larger selection of recipes at the same time as they have guaranteed orders for each recipe rather than trying to forecast orders. This larger selection of recipes allows stores to be more competitive and can make notable cost reductions, removal of lost sales and related benefits.

In one approach, a user selects order component pre-selection options via a human readable computer interface including a meal recipe presentation functionality, providing advantages over standard ecommerce platforms designed to sell individual items. The software may have functionality to search based on dietary preferences, and permit the merchant to organise recipes into curated collections, that is, a control over the recipes presented to the consumer based on their preferences and availability. Additionally, users can be presented with multiple options for a recipes ranging from a recipe fully prepared by the store for reheating, a meal kit or simply adding the raw ingredients to the shopping cart, providing enhanced functionality for different groups of customers.

It will be seen that the approaches described herein can be implemented in any appropriate fashion. When the automated storage and retrieval system comprises a grocery store, the existing ecommerce solutions can be modified to provide customers with the opportunity to order meal kits for assembly and storage or refrigerated storage awaiting pick up or delivery. Yet further, grocery stores can contact with a provider to allow customers to place orders through the providers website and then pick up the order at a local store. Hence, the grocery store can cooperate with, for example, a remote fulfilment center as an alternative to producing their own meal kits, relying on the enhance logistical benefits accordingly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following paragraphs are intended to demonstrate that certain features may be included together with other features in one or more embodiments of the disclosed invention. These are merely meant to be explicit examples of combinations of features and not an exhaustive list.

In one or more embodiments, the present invention relates to a method of creating a production order in an automated storage and retrieval system, the production order comprising a preselected set of order components, the method comprising receiving an order component preselection, retrieving the components at the automated storage and retrieval system, collecting the set of components as a production order kit and storing the production order kit at the automated storage and retrieval system.

The method may further comprise automatically delivering the production order kit to a location external to the automated storage and retrieval system. The method may include the feature that the kit is combined with a consumer order or the kit or consumer order is delivered to a consumer access point. Any embodiment of the method may also comprise creating a plurality of production orders in a batch creation step. The production orders may be for a common set of components or the production orders may be for different sets of components.

Any embodiment of the method may further comprise presenting order component preselection options via a human readable computer interface. The human readable computer interface may comprise a kit presentation element such as a meal recipe presentation functionality. Any embodiment of the method may include the feature that the set of order components comprises a meal recipe. The order component preselection options may be presented according to user preferences. Any embodiment of the method may include the feature that the automated storage and retrieval system comprises one of an in-store automated storage and retrieval system and a remote fulfilment centre.

In one or more embodiments, the present invention relates to a computer readable medium storing instructions which, when executed by a processor, perform any of the above-described methods. In one or more embodiments, the present invention relates to an automated storage and retrieval system including a processor arranged to implement instructions stored on the computer readable medium.

Examples of the present disclosure are set out in the following numbered clauses.
1. A method of creating a production order in an automated storage and retrieval system, the production order comprising a preselected set of order components, the method comprising receiving an order component preselection, retrieving the components at the automated storage and retrieval system, collecting the set of components as a production order kit and storing the production order kit at the automated storage and retrieval system.
2. A method as set out in clause 1 further comprising automatically delivering the production order kit to a location external to the automated storage and retrieval system.
3. A method as set out in clause 2 in which the kit is combined with a consumer order.
4. A method as set out in clause 2 in which the kit or consumer order is delivered to a consumer access point.
5. A method as set out in clause 1 further comprising creating a plurality of production orders in a batch creation step.
6. A method as set out in clause 5 in which the production orders are for a common set of components.
7. A method as set out in clause 5 in which the production orders are for different sets of components.
8. A method as set out in clause 1 further comprising presenting order component preselection options via a human readable computer interface.
9. A method as set out in clause 9 in which the human readable computer interface comprises a kit presentation element such as a meal recipe presentation functionality.
10. A method as set out in clause 1 in which the set of order components comprises a meal recipe.
11. A method as set out in clause 10 in which order component preselection options are presented according to user preferences.
12. A method as set out in clause 1 in which the automated storage and retrieval system comprises one of an in-store automated storage and retrieval system and a remote fulfilment centre.
13. A computer readable medium storing instructions which, when executed by a processor, perform a method of creating a production order in an automated storage and retrieval system, the production order comprising a preselected set of order components, the method comprising receiving an order component preselection, retrieving the components at the automated storage and retrieval system, collecting the set of components as a production order kit and storing the production order kit at the automated storage and retrieval system.
14. An automated storage and retrieval system including a processor arranged to implement instructions stored on a computer readable medium as set out in clause 13.

## Claims

1. A method of creating a production order in an automated storage and retrieval system, the production order comprising a preselected set of order components, the method comprising receiving an order component preselection, retrieving the components at the automated storage and retrieval system, collecting the set of components as a production order kit and storing the production order kit at the automated storage and retrieval system.

2. A method as claimed in claim 1 further comprising automatically delivering the production order kit to a location external to the automated storage and retrieval system.

3. A method as claimed in claim 2 in which the kit is combined with a consumer order.

4. A method as claimed in claim 2 or in which the kit or consumer order is delivered to a consumer access point.

5. A method as claimed in any preceding claim further comprising creating a plurality of production orders in a batch creation step.

6. A method as claimed in claim 5 in which the production orders are for a common set of components.

7. A method as claimed in claim 5 or claim 6 in which the production orders are for different sets of components.

8. A method as claimed in any preceding claim further comprising presenting order component preselection options via a human readable computer interface.

9. A method as claimed in claim 9 in which the human readable computer interface comprises a kit presentation element such as a meal recipe presentation functionality.

10. A method as claimed in any preceding claim in which the set of order components comprises a meal recipe.

11. A method as claimed on claim 10 in which order component preselection options are presented according to user preferences.

12. A method as claimed in any preceding claim in which the automated storage and retrieval system comprises one of an in-store automated storage and retrieval system and a remote fulfilment centre.

13. A computer readable medium storing instructions which, when executed by a processor, perform the method of any of claims 1 to 12.

14. A automated storage and retrieval system including a processor arranged to implement instructions stored on a computer readable medium as claimed in claim 13.

## Amended claims

### Amended claims in accordance with Rule 137(2) EPC.

1. A method of creating a production order in an automated storage and retrieval system, the production order comprising a preselected set of order components, the method comprising receiving (S502) an order component preselection, retrieving (S506) the components at the automated storage and retrieval system, collecting the set of components as a production order kit and storing (S508) the production order kit at the automated storage and retrieval system.

2. A method as claimed in claim 1 further comprising automatically delivering the production order kit to a location external to the automated storage and retrieval system.

3. A method as claimed in claim 2 in which the kit is combined with a consumer order.

4. A method as claimed in claim 2 or in which the kit or consumer order is delivered to a consumer access point.

5. A method as claimed in any preceding claim further comprising creating a plurality of production orders in a batch creation step.

6. A method as claimed in claim 5 in which the production orders are for a common set of components.

7. A method as claimed in claim 5 or claim 6 in which the production orders are for different sets of components.

8. A method as claimed in any preceding claim further comprising presenting order component preselection options via a human readable computer interface.

9. A method as claimed in claim 9 in which the human readable computer interface comprises a kit presentation element such as a meal recipe presentation functionality.

10. A method as claimed in any preceding claim in which the set of order components comprises a meal recipe.

11. A method as claimed on claim 10 in which order component preselection options are presented according to user preferences.

12. A method as claimed in any preceding claim in which the automated storage and retrieval system comprises one of an in-store automated storage and retrieval system and a remote fulfilment centre.

13. A computer readable medium storing instructions which, when executed by a processor, perform the method of any of claims 1 to 12.

14. A automated storage and retrieval system including a processor arranged to implement instructions stored on a computer readable medium as claimed in claim 13.
